# EUROPÄISCHE PATENTSCHRIFT

(11) **EP 2 262 658 B1**
(45) Veröffentlichungstag und Bekanntmachung des Hinweises auf die Patenterteilung: **20.03.2013**
(21) Anmeldenummer: 09704934.0
(22) Anmeldetag: 21.01.2009
(51) Int. Cl.: B60K 6/387, F16D 23/14

(54) **ANTRIEB FÜR EIN HYBRIDFAHRZEUG SOWIE KUPPLUNG MIT EINER AUSRÜCKVORRICHTUNG**
DRIVE FOR A HYBRID VEHICLE AND CLUTCH WITH RELEASE MECHANISM
ENTRAÎNEMENT POUR VÉHICULE HYBRIDE ET EMBRAYAGE COMPORTANT UN DISPOSITIF DE DÉBRAYAGE

(30) Priorität: 06.03.2008 DE 102008012903
(43) Veröffentlichungstag der Anmeldung: 22.12.2010
(73) Patentinhaber: Robert Bosch GmbH, 70442 Stuttgart (DE)
(72) Erfinder: BANHEGYI, Erich, 71732 Tamm (DE); HERZBERGER, Andreas, 73553 Alfdorf (DE)
(86) Internationale Anmeldenummer: PCT/EP2009/050649
(87) Internationale Veröffentlichungsnummer: WO 2009/109412

(56) Entgegenhaltungen:
- DE-A1- 10 204 156
- FR-A- 2 837 246
- GB-A- 2 052 670
- US-A- 5 691 588

## Beschreibung

Die Erfindung betrifft einen Antrieb für ein Hybridfahrzeug gemäß dem Oberbegriff des Anspruchs 1.

### Stand der Technik

In der Offenlegungsschrift DE 10 2006 016 133 A 1 ist beschrieben, dass Antriebe für Hybridfahrzeuge im allgemeinen aus einem Verbrennungsmotor, mindestens einer Kupplung und einer elektrischen Maschine bestehen. Zwischen dem Verbrennungsmotor und der elektrischen Maschine ist die Kupplung geschaltet, die je nach Betriebsstrategie und dem jeweiligen Betriebszustand geöffnet oder geschlossen ist. Kupplungen in hybridangetriebenen Fahrzeugen müssen aufgrund der erhöhten Betätigungsanzahl, die durch die im Hybrid erforderlichen Betriebsstrategien entstehen, belastbarer als herkömmliche Kraftfahrzeugkupplungen sein. Eine Möglichkeit, die Lebensdauer zu steigern sieht vor, dass die Ausrückvorrichtung der Kupplung im Kupplungssystem drehbar gelagert und an einem verdrehgesicherten Gehäuseteil abgestützt wird, man spricht von einem deckelfestem Ausrücksystem wie zum Beispiel in der Offenlegungsschrift DE 103 13 435 A1 beschrieben. Nachteilig bei einer solchen Ausführung in Hybridsystemen ist, dass durch die, im Gegensatz zu herkömmlichen gehäusefesten Ausrückvorrichtungen, zusätzlich notwendigen Lager in der Ausrückvorrichtung und im Kupplungssystem Schleppmomente entstehen. Diese Schleppmomente führen in der Kontaktstelle zwischen Ausrückvorrichtung und Gehäuse auf Dauer zu Verschleiß und zu Schäden, die die Funktion des Antriebssystems beeinträchtigen und schließlich zu einem Ausfall führen können.

Aus der US 5 691 588 A ist ein Antrieb für ein Hybridfahrzeug bekannt mit einer elektrischen Maschine, die in einem Gehäuse angeordnet ist, und mit einer Kupplung, die mit einer Ausrückvorrichtung versehen ist. Die Ausrückvorrichtung ist an der Kupplung gelagert. In der DE 102 04 156 A1 ist eine Kupplung mit einer Ausrückvorrichtung offenbart, wobei die Ausrückvorrichtung mit einem gehäusefesten Bauteil verdrehgesichert verbunden ist.

### Offenbarung der Erfindung

Zur Beseitigung dieser Nachteile schlägt die Erfindung einen Antrieb für ein Hybridfahrzeug vor, deren elektrische Maschine in einem Gehäuse angeordnet ist und deren Kupplung mit einer Ausrückvorrichtung versehen ist, die in der Kupplung gelagert ist und über mindestens ein Dämpfungselement verdrehsicher mit einem gehäusefesten Bauteil verbunden ist, und das gehäusfeste Bauteil ein Lagerschild der elektrischer Maschine ist.

Die Nutzung von im Antriebssystem des Hybridfahrzeugs vorhandenen Bauteilen spart Bauraum und Kosten für zusätzliche Bauteile.

Ein Vorteil einer deckelfesten Ausrückvorrichtung einer Kupplung in einem Antrieb eines hybridgetriebenen Fahrzeugs besteht darin, dass Kräfte, die bei der Betätigung der Kupplung entstehen und deren Gegenkräfte (actio = reactio), durch den Deckel der Kupplungsdruckplatte aufgenommen werden und somit im System Kupplung bleiben. Bei herkömmlichen gehäusefesten Ausrückvorrichtungen werden die bei der Betätigung entstehenden Kräfte über das Gehäuse der Kupplung aufgenommen und die dadurch entstehenden Gegenkräfte über die Kupplung und die Kurbelwelle weitergegeben und von der Kurbelwellenlagerung aufgenommen. Kurbelwellenlager sind üblicherweise als radiale Gleitlager ausgeführt und sind somit nicht für hybridspezifische Anforderungen ausgelegt.

Das im Deckel der Kupplungsdruckplatte aufgenommene Deckellager und das in der Ausrückvorrichtung aufgenommene Ausrücklager verursachen bei einer Drehbewegung der Kupplungsdruckplatte Schleppmomente. Diese Momente und die tangentialen Bewegungen in Hauptbelastungsrichtung werden vorteilhaft über einen Hebel der Ausrückvorrichtung aufgenommen, der sich an einem gehäusefesten Bauteil abstützt. Es sind verschiedene formschlüssige Verbindungen zwischen der Ausrückvorrichtung und dem gehäusefesten Bauteil denkbar, zum Beispiel Vorsprünge an der Ausrückvorrichtung und eine korrespondierende negative Geometrie an dem gehäusefesten Bauteil, um die Bewegungen und Schleppmomente aufzunehmen.

Durch das hochdynamische Verhalten der Kupplung, welches sich aus den Kurbelwellenbewegungen, fertigungsbedingten Planlaufabweichungen und Restunwuchten ergibt, entstehen zusätzliche zu den tangentialen Bewegungen auch mehrdimensionale Relativbewegungen zwischen dem an der Kupplungsdruckplatte befestigten Ausrücker und dem gehäusefesten Bauteil. Dabei treten Beschleunigungskräfte auf, die ein vielfaches der statisch aufgenommenen Kräfte betragen. Die Relativbewegungen verursachen Verschleiß zwischen dem Hebel und dem gehäusefesten Bauteil, sowie eine hohe Geräuschemission. Diese Relativbewegungen werden erfindungsgemäß durch ein Dämpfungselement verschleißfrei und geräuscharm aufgenommen.

Vorzugsweise ist vorgesehen, dass das Dämpfungselement aus einem Elastomer, insbesondere einem Elastomer der Shore-Härte-A 60 hergestellt ist.

Das Dämpfungselement ist erfindungsgemäß so ausgelegt, dass es an dem gehäusefesten Bauteil anliegt und die entstehenden Bewegungen absorbiert. Die Verschleißfreiheit ist durch einen hohen Reibwert zwischen dem Dämpfungselement und dem gehäusefesten Bauteil gegeben, da der hohe Reibwert keine Relativbewegungen zwischen dem Dämpfungselement und dem gehäusefesten Bauteil zulässt.

Eine bevorzugte Ausgestaltung sieht vor, dass an dem Lagerschild Anschläge ausgebildet sind, zwischen die der Hebel der Ausrückvorrichtung eingreift. Diese können je nach Fertigungsart des Lagerschilds angegossen, angeschraubt oder auf andere Art und Weise mit dem Lagerschild verbunden sein.

In einer vorteilhaften Ausführungsform weist das Dämpfungselement an den Wirkflächen mit den Anschlägen jeweils eine Dämpfungswulst auf, um durch mehr Material ein besseres Dämpfungsverhalten zu erhalten. Das Dämpfungselement ist vorzugsweise so ausgelegt, dass es zwischen den Anschlägen des Lagerschilds und dem Dämpfungselement eine Presspassung, und damit eine Vorspannung gibt.

Die Dämpfungswülste sind in einer Ausgestaltung durch Stege miteinander verbunden, die ein Verschrauben oder Verstiften des Dämpfungselements mit dem Hebel der Ausrückvorrichtung ermöglichen. Der Hebel weist für diese Montage geeignete Bohrungen auf.

Eine weitere kostengünstige und montagefreundliche Ausführungsform sieht vor, dass das Dämpfungselement als Schlauch mit seitlich angeformten Dämpfungswülsten ausgebildet ist. Diese Ausführungsform ist durch Aufstülpen leicht auf den Hebel der Ausrückvorrichtung zu montieren. Die Geometrie des Hebels ist durch eine umlaufende Nut und Begrenzungsstufen so ausgebildet, dass sich das Dämpfungselement optimal einpasst und radial fixiert ist.

### Kurze Beschreibung der Zeichnung

Ausführungsbeispiele der Erfindung sind in der Zeichnung dargestellt und in der nachfolgenden Beschreibung näher erläutert.

Es zeigen:
Figur 1: Eine Explosionszeichnung einer perspektivischen Darstellung einer Kupplung;
Figur 2: Eine perspekftivische Darstellung eines Ausschnitts eines Lagerschilds und einer Ausrückvorrichtung;
Figur 3: Eine perspektivische Darstellung einer ersten Ausführungsform eines Dämpfungselements;
Figur 4: Eine perspektivische Darstellung einer zweiten Ausführungsform eines Dämpfungselements;
Figur 5: Eine perspektivische Darstellung einer Ausführungsform eines Vorsprungs;
Figur 6: Eine perspektivische Darstellung eines montierten Dämpfungselements gemäß der zweiten Ausführungsform.

### Ausführungsformen der Erfindung

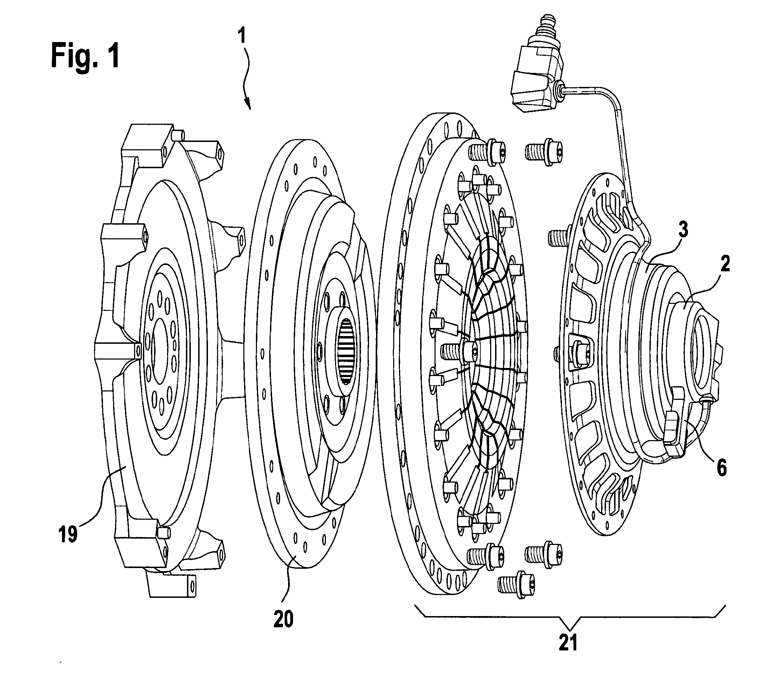

Die in Fig. 1 dargestellte Explosionszeichnung zeigt die wesentlichen Bauteile einer Kupplung 1. Es ist eine Ausrückvorrichtung 2 mit einem Vorsprung 6 dargestellt, die in einem Deckel 3 einer Druckplatte 21 gelagert ist. Desweiteren umfasst das System der Kupplung 1 eine Schwungscheibe 19 und eine Kupplungsscheibe 20.

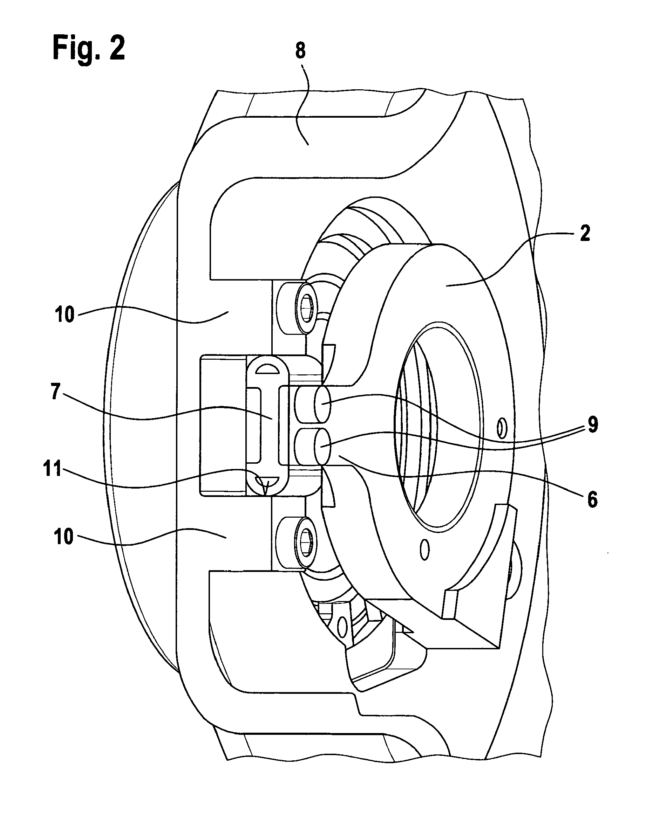

In Fig. 2 ist die Ausrückvorrichtung 2 näher dargestellt. Der Vorsprung 6 ist durch einen von der Ausrückvorrichtung 2 radial abstehenden Hebel gebildet, an dem ein Dämpfungselement 7 mittels Verbindungselementen 9 befestigt ist. Diese können zum Beispiel Schrauben oder Stifte sein. In der in Fig.2 dargestellten Ausführungsform ist ein gehäusefestes Bauteil 8 durch ein Lagerschild einer elektrischen Maschine gebildet, an das zwei beabstandete Anschläge 10 einstückig angeformt sind, zwischen die das an dem Vorsprung 6 angebrachte Dämpfungselement 7 eingreift. Das Dämpfungselement 7 berührt die Anschläge 10 über Reibflächen 11, wobei die Anschläge 10 das Verdrehen der Ausrückvorrichtung 2 in tangentialer Richtung verhindern, sowie Kräfte und Momente von der Ausrückvorrichtung 2 aufnehmen. Die Aufnahme der Kräfte und Momente, sowie die Verdrehsicherung in tangentialer Richtung kann auch über jede beliebige geometrische Bauform, die eine formschlüssige Verbindung zwischen dem Vorsprung 6 und dem gehäusefesten Bauteil 8 über das Dämpfungselement 7 bildet, erfolgen.

Das gehäusefeste Bauteil 8 kann zum Beispiel aus Metall bestehen und per Gießverfahren hergestellt sein, das das einstückige Anformen der Anschläge 10 ermöglicht. Die Anschläge 10 können alternativ auch durch Schrauben oder Nieten mit dem gehäusefesten Bauteil 8 verbunden sein.

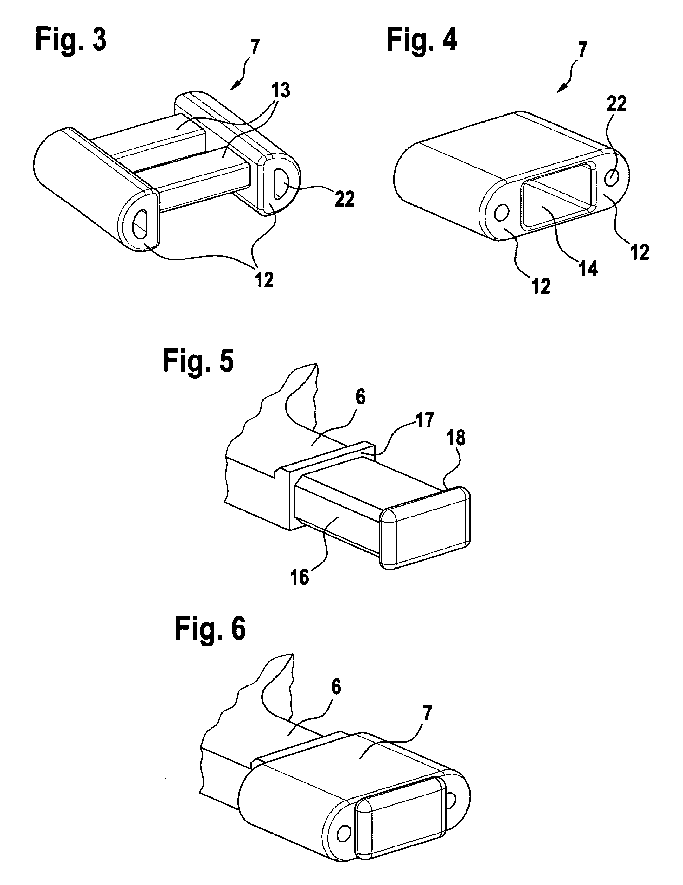

Eine erste bevorzugte Ausführungsform des Dämpfungselements 7 ist in Fig. 3 dargestellt. Das Dämpfungselement 7 ist einstückig aus zwei parallel zueinander gerichteten Dämpfungswülsten 12 gebildet, die über zwei Stege 13 miteinander verbunden sind. Die Dämpfungswülste 12 sind in dieser Ausführungsform im Querschnitt halbkreisförmig, wobei die jeweils abgerundete Seite nach außen gerichtet ist. An der flachen inneren Seite sind die Stege 13 angeformt. Die Dämpfungswülste 12 weisen jeweils einen Hohlraum auf, der als Durchgang 22 parallel zum Vorsprung 6 der Ausrückvorrichtung 2 in radialer Richtung ausgebildet ist und der zur Verbesserung des Dämpfungsverhaltens dient. In einer bevorzugten Ausgestaltung ist der Durchgang 22 in der gleichen geometrischen Form ausgebildet wie die Dämpfungswülste 12. Es sind auch andere geometrische Formen für die Durchgänge 22 möglich, die das Dämpfungsverhalten verbessern, sowie Dämpfungswülste 12 aus Vollmaterial. Die Stege 13 sind rechteckig ausgeführt und weisen in axialer Richtung der Ausrückvorrichtung 2 ein geringeres Maß als die Dämpfungswülste 12 auf. Die Stege 13 sind in axialer Richtung der Ausrückvorrichtung 2 so an der flachen inneren Seite der Dämpfungswülste 12 angeformt, dass sie nicht mit den oberen und unteren Rändern der Dämpfungswülste 12 abschliessen. Zwischen den Stegen 13 ist ein Mindestenstabstand einzuhalten, der das Durchstecken von Verbindungselementen 9 ermöglicht. Die Bauform dieser Ausgestaltung dient der Aufnahme des Dämpfungselements 7 in den Vorsprung 6 der Ausrückvorrichtung 2, wobei das Dämpfungselement 7 in den Vorsprung eingeschoben ist und zum Beispiel über Schrauben oder Stiften an der Ausrückvorrichtung 2 fixiert ist.

Eine weitere bevorzugte Ausführungsform ist in Fig. 4 bis 6 dargestellt. Das Dämpfungselement 7 ist als Schlauch 14 ausgebildet und weist an den Seiten Dämpfungswülste 12 auf, die nach außen abgerundet sind. In den Dämpfungswülsten 12 sind Durchgänge 22 mit einem kreisförmigen Querschnitt eingeformt und mit Entformschrägen für die Fertigung versehen. Auch in dieser Ausführungsform sind weitere geometrische Querschnitte, die der Funktion zuträglich sind, möglich, sowie Dämpfungswülste 12 aus Vollmaterial. Der innere Schlauch 14 des Dämpfungselements 7 in Fig. 4 hat die gleiche geometrische Form, wie eine in Fig. 5 dargestellte Nut 16 des Vorsprungs 6 der Ausrückvorrichtung 2. Vorteilhaft an dieser Ausführung ist die einfache Montage des Dämpfungselements 7, durch Überstülpen auf den Vorsprung 6, die ohne zusätzliche Verbindungselemente auskommt. In der in Fig. 5 dargestellten Ausführungsform sind an den Vorsprung 6 Begrenzungsstufen 17, 18 einstückig angeformt, die das Dämpfungselement 7 in radialer Richtung der Ausrückvorrichtung 2 auf der Ausrückvorrichtung 2 fixieren. Der innere Querschnitt des Schlauchs 14 ist, zum verbesserten Halt auf dem Vorsprung 6, vorzugsweise kleiner als der äußere Querschnitt der Nut 16 auszulegen. Dies sorgt für ein sattes Anliegen des Dämpfungselements 7 auf dem Vorsprung 6 und verbessert die Absorbierung der auftretenden Kräfte und Momente.

Das Material des Dämpfungselements 2 besitzt dämpfende Eigenschaften und weist einen hohen Reibwert auf der Reibfläche 11 zwischen dem Dämpfungselement 7 und den Anschlägen 10 auf. Vorzugsweise sind diese Eigenschaften durch Elastomere erfüllt, insbesondere durch Elastomere mit der der Shore-Härte-A 60. Die Dämpfungselemente 7 werden zum Beispiel durch Spritzgießen, Pressen oder Spritzpressen hergestellt.

## Patentansprüche

1. Antrieb für ein Hybridfahrzeug, mit einer elektrischen Maschine, die in einem Gehäuse angeordnet ist und mit einer Kupplung (1), die mit einer Ausrückvorrichtung (2) versehen ist, welche an der Kupplung (1) gelagert ist, **dadurch gekennzeichnet, dass** die Ausrückvorrichtung (2) über mindestens ein Dämpfungselement (7) mit einem gehäusefesten Bauteil (8) verdrehgesichert verbunden ist und das gehäusefeste Bauteil (8) ein Lagerschild der elektrischen Maschine ist.

2. Antrieb für ein Hybridfahrzeug nach Anspruch 1, **dadurch gekennzeichnet, dass** die Ausrückvorrichtung (2) über wenigstens einen Vorsprung (6) mit dem gehäusefesten Bauteil (8) formschlüssig verbunden ist.

3. Antrieb für ein Hybridfahrzeug nach einem der vorhergehenden Ansprüche, **dadurch gekennzeichnet, dass** das Dämpfungselement (7) an dem gehäusefesten Bauteil (8) anliegt und dabei eine Reibpaarung mit hohem Reibwert bildet.

4. Antrieb für ein Hybridfahrzeug nach Anspruch 2, **dadurch gekennzeichnet, dass** am gehäusefesten Bauteil (8) Anschläge (10) einstückig ausgebildet, insbesondere angeschraubt sind, zwischen die der Vorsprung (6) eingreift.

5. Antrieb für ein Hybridfahrzeug nach Anspruch 3, **dadurch gekennzeichnet, dass** das Dämpfungselement (7) aus einem Elastomer der Shore-Härte-A 60 gebildet ist.

6. Antrieb für ein Hybridfahrzeug nach Anspruch 4, **dadurch gekennzeichnet, dass** das Dämpfungselement (7) aus zwei mit den Anschlägen (10) zusammenwirkenden Dämpfungswülsten (12) besteht.

7. Antrieb für ein Hybridfahrzeug nach Anspruch 6, **dadurch gekennzeichnet, dass** die Dämpfungswülste (12) des Dämpfungselements (7) durch mindestens einen Steg (13) einstückig miteinander verbunden sind.

8. Antrieb für ein Hybridfahrzeug nach Anspruch 7, **dadurch gekennzeichnet, dass** der Vorsprung (6) der Ausrückvorrichtung (2) mindestens eine Durchgangsbohrung (15) aufweist, über die das Dämpfungselement (7) mittels Verbindungselementen (9), insbesondere Schrauben oder Stiften an der Ausrückvorrichtung (2) befestigt ist.

9. Antrieb für ein Hybridfahrzeug nach Anspruch 6, **dadurch gekennzeichnet, dass** das Dämpfungselement (7) als Schlauch (14) ausgeführt ist, an dessen Seiten die Dämpfungswülste (12) angeformt sind.

10. Antrieb für ein Hybridfahrzeug nach Anspruch 9, **dadurch gekennzeichnet, dass** der Vorsprung (6) der Ausrückvorrichtung (2) eine umlaufende Nut (16) aufweist, in die das Dämpfungselement (7) eingepasst ist, und dass an den Stirnseiten der Nut (16) Begrenzungsstufen (17, 18) angeformt sind.

## Claims

1. Drive for a hybrid vehicle, having an electric machine which is arranged in a housing and having a clutch (1) which is provided with a release device (2) mounted on the clutch (1), **characterized in that** the release device (2) is connected in a rotationally secured manner via at least one damping element (7) to a component (8) which is fixed with respect to the housing, and the component (8) which is fixed with respect to the housing is a bearing shield of the electric machine.

2. Drive for a hybrid vehicle according to Claim 1, **characterized in that** the release device (2) is connected in a positively locking manner by means of at least one projection (6) to the component (8) which is fixed with respect to the housing.

3. Drive for a hybrid vehicle according to one of the preceding claims, **characterized in that** the damping element (7) bears against the component (8) which is fixed with respect to the housing, and in so doing, forms a friction pairing with a high friction coefficient.

4. Drive for a hybrid vehicle according to Claim 2, **characterized in that** stops (10) are integrally formed on, in particular screwed onto, the component (8) which is fixed with respect to the housing, between which stops the projection (6) engages.

5. Drive for a hybrid vehicle according to Claim 3, **characterized in that** the damping element (7) is formed from an elastomer with a Shore A hardness of 60.

6. Drive for a hybrid vehicle according to Claim 4, **characterized in that** the damping element (7) is composed of two damping beads (12) which interact with the stops (10).

7. Drive for a hybrid vehicle according to Claim 6, **characterized in that** the damping beads (12) of the damping element (7) are integrally connected to one another by at least one web (13).

8. Drive for a hybrid vehicle according to Claim 7, **characterized in that** the projection (6) of the release device (2) has at least one passage bore (15) via which the damping element (7) is fastened by means of connecting elements (9), in particular screws or pins, to the release device (2).

9. Drive for a hybrid vehicle according to Claim 6, **characterized in that** the damping element (7) is in the form of a pipe (14), on the sides of which the damping beads (12) are integrally formed.

10. Drive for a hybrid vehicle according to Claim 9, **characterized in that** the projection (6) of the release device (2) has an encircling channel (16) into which the damping element (7) is fitted, and **in that** delimiting steps (17, 18) are integrally formed at the end sides of the channel (16).

## Revendications

1. Entraînement pour un véhicule hybride, avec un moteur électrique disposé dans un carter et avec un embrayage (1) pourvu d'un dispositif de débrayage (2) disposé au niveau de l'embrayage (1), **caractérisé en ce que** le dispositif de débrayage (2) est relié de façon sécurisée contre les torsions à un composant (8) fixe par rapport au carter par le biais d'au moins un élément d'amortissement (7) et que le composant (8) fixe par rapport au carter est un panneau de palier de roulement du moteur électrique.

2. Entraînement pour un véhicule hybride selon la revendication 1, **caractérisé en ce que** le dispositif de débrayage (2) est relié par complémentarité de formes au composant (8) fixe par rapport au carter par le biais d'au moins un élément saillant (6).

3. Entraînement pour un véhicule hybride selon l'une quelconque des revendications précédentes, **caractérisé en ce que** l'élément d'amortissement (7) est placé contre le composant (8) fixe par rapport au carter et forme en l'occurrence une paire de frottements à valeur de frottement élevée.

4. Entraînement pour un véhicule hybride selon la revendication 2, **caractérisé en ce que** des butées (10) entre lesquelles s'emboîte l'élément saillant (6) sont réalisées d'un seul tenant au niveau du composant (8) fixe par rapport au carter, notamment vissées.

5. Entraînement pour un véhicule hybride selon la revendication 3, **caractérisé en ce que** l'élément d'amortissement (7) est fabriqué à partir d'un élastomère de dureté Shore A 60.

6. Entraînement pour un véhicule hybride selon la revendication 4, **caractérisé en ce que** l'élément d'amortissement (7) se compose de deux bourrelets amortissants (12) entrant en interaction avec les butées (10).

7. Entraînement pour un véhicule hybride selon la revendication 6, **caractérisé en ce que** les bourrelets amortissants (12) de l'élément d'amortissement (7) sont reliés entre eux d'un seul tenant par le biais d'au moins un étai (13).

8. Entraînement pour un véhicule hybride selon la revendication 7, **caractérisé en ce que** l'élément saillant (6) du dispositif de débrayage (2) comporte au moins un alésage traversant (15) via lequel l'élément d'amortissement (7) est fixé au dispositif de débrayage (2) par le biais d'éléments de liaison (9), notamment de vis ou de tiges.

9. Entraînement pour un véhicule hybride selon la revendication 6, **caractérisé en ce que** l'élément d'amortissement (7) prend la forme d'un tuyau flexible (14) contre les côtés duquel sont formés les bourrelets amortissants (12).

10. Entraînement pour un véhicule hybride selon la revendication 9, **caractérisé en ce que** l'élément saillant (6) du dispositif de débrayage (2) comporte une rainure (16) périphérique dans laquelle l'élément d'amortissement (7) est inséré et que des gradins de délimitation (17, 18) sont réalisés au niveau des côtés avant de la rainure (16).
